# EUROPEAN PATENT SPECIFICATION

(11) **EP 2 324 470 B1**
(45) Date of publication and mention of the grant of the patent: **15.08.2012**
(21) Application number: 09786227.0
(22) Date of filing: 07.09.2009
(51) Int. Cl.: G09F 3/00

(54) **BOTTLE SHIELDS**
FLASCHENAUFKLEBER
PROTECTIONS DE BOUTEILLE

(30) Priority: 10.09.2008 IT PI20080092
(43) Date of publication of application: 25.05.2011
(73) Proprietor: Acone, Onofrio, 84081 Baronissi (SA) (IT); Acone, Davide, 84081 Baronissi (SA) (IT)
(72) Inventor: Acone, Onofrio, 84081 Baronissi (SA) (IT); Acone, Davide, 84081 Baronissi (SA) (IT)
(74) Representative: Turini, Laura
(86) International application number: PCT/IB2009/006774
(87) International publication number: WO 2010/029402

(56) References cited:
- EP-A1- 0 905 664
- GB-A- 2 286 380
- GB-A- 2 401 581
- US-A- 4 775 786
- US-B1- 6 498 032
- US-B1- 6 582 805

## Description

### Field of the Invention

The present invention refers to the technical field of the shielding of bottles for beverages in general. In particular, it refers to a new type of shield.

It is also described below the relative method for realizing the said shield.

### Background Art

The ordinary bottle shields on which names and/or features of the product are indicated have long been known.

Bottle shielding has become an important means of identification which allows not only to present the bottled product to the public in a distinctive manner, but also to make the final consumer know important features of the content. This is the case not only of the shielding of prestigious bottles (for example, bottles of wine or sparkling wine of big brands) but also of bottles of more ordinary products.

It is also known how the usually used shields of paper, cardboard and similar materials are not at all exempt from problems of different nature. For example, wine bottles are many times stored for long periods of time in cellars in order to keep them at the right temperature. However, an ordinary glued paper shield rarely keeps its entirety with the passing of time due to the effects of humidity and condensation that appear on the surface of the bottle itself. The consequence of this is the progressive deterioration of the shield by wear and tear and the impossibility of reading it.

Despite the impossibility of reading the shield can apparently seem a minor technical problem, its importance is quite relevant for those who market the bottles and work in the sector. Just to think of the prestigious restaurants richly furnished with excellent wine bottles in their cellars or, similarly, to the producers and suppliers of bottles of wine or other prestigious beverages in general who usually supply the said restaurants. In case a client of a restaurant, for example, ordered a valuable bottle and this were "not presentable" from the point of view of the shield, the restaurant would most probably be obliged to take another one and put that bottle aside, not being able to sell it and suffering some kind of economic loss. In other cases, the client itself could reject the bottle when it is presented to it precisely because the shield is illegible, and this could cause the loss of image of the restaurant in question and/or of the producer or supplier.

The problem still exists for the conservation of the bottle in the fridge. Also in this case, humidity drops and, above all, condensation drops can significantly damage the shield, exactly as already described.

It should also be highlighted that the ordinary and usually used shields have a high degree of absorbency. This implies that, in case of accidental spilling of liquids on the shield or of the need to wash the bottle, the shield could be inevitably compromised, rendering the bottle not presentable and therefore not able for use.

Moreover, all the usually used paper or cardboard shields allow simple writings in ink, which can be erased, deteriorate or disappear precisely due to the action of humidity and the passing of time.

Last but not least, it should be highlighted that all the usually used shields are of the single-use type, not allowing their removal and successive new application. The removal of a standard paper or cardboard shield would cause its excessive deterioration and consequently, it would be impossible to use it again.

In US6582805 it is described a particular shield composed of two ceramic layers overlapped with reproducing bar codes that are legible either to optical readers or to the naked eye. Although such shield structure could apparently result suitable for the overcoming of some of the technical inconveniences indicated above, it still presents further different disadvantages. The characters obtained are indeed realized through an incision, and therefore removal, directly of the superior covering layer with the aim of realizing a contrast between the covering layer itself and the one below at sight. Still, it is evident how such a technique of incision causes a loss of homogeneity of the covering of the writing, rendering the same not very appealing. Moreover, such an incisive or abrasive technique can be the cause of possible breakages of the covering layer itself, rendering the incision of complex and very deep characters impossible. In that sense, with such a technique can be therefore reproduced only very simple and not very deep linear traits and, as a consequence, not conspicuous to the naked eye.

### Disclosure of Invention

It is therefore the aim of the present invention to provide a new type of bottle shield that overcomes all the above mentioned inconveniences.

In particular, it is the aim of the present invention to provide a new type of shield that is practically non-absorbent, thus resisting to the effects of humidity with the passing of time and liquids in general, and avoiding the absorption of them and the consequent deterioration.

It is also the aim of the present invention to provide a shield that is washable when needed.

It is also the aim of the present invention to provide a shield that allows to reproduce on it writings of the three-dimensional type and anyway not only obtained exclusively with the simple use of ink.

It is also the aim of the present invention to provide a shield that can be eventually re-used after its removal from the bottle.

Lastly, it is the aim of the present invention to provide a shield in which the characters in high and/or low relief can be conspicuous to the naked eye, even without the need of colour contrasts, and can also have uniformity and continuity.

These and other aims are therefore reached with a shield (2) for bottles, particularly for bottles of wine or sparkling wine, comprising at least a rigid body (3) of a ceramic material reproducing writing characters (6) in low and/or high relief, the said rigid body (3) comprising at least a first layer (7; 7') of terracotta and at least a second layer (8; 8'). In accordance with the present invention, the first layer (7; 7') reproduces the writing characters in high and/or low relief and the second layer is a layer of enamel (8; 8') overlapped with the first layer in such a way that it covers at least the said writing characters (6) uniformly.

In accordance with such an invention, therefore, the enamel uniformly recovers the writing in high and/or low relief, rendering the same shiny, homogeneous, continuous, and therefore conspicuous.

Preferably, the rigid body (3) is realized with a thickness **dₓ** comprised within a range that goes from 2mm to 6mm, although different dimensions of thickness can anyway be obtained.

Advantageously, the rigid body (3) is configured according to a predetermined radius of curvature **R₁** in such a way so as to trace at least approximately the curved shape of the bottle.

Moreover, the shield comprises an internal face (4) for being placed in adherence to the bottle, the said internal face comprising glueing means.

Advantageously, among the different possible solutions, the glueing means can comprise glue drops (12) placed in predetermined spots on the internal face.

Alternatively, the glueing means can comprise a layer of an adhesive material, such as a liquid bi-component of strong seal.

It is also described here a method for realizing a bottle shield comprising at least the operations of:
- Casting of liquid clay in an appropriate mould (13) of plaster reproducing characters (14) in high and/or low relief in such a way so as to obtain a layer that reproduces the characters in high and/or low relief (14) of the mould.
- Successive partial natural drying of the said layer of clay.
- Curving of the said layer of clay and simultaneous completion of the drying.
- Successive firing in a kiln at a temperature of about 980° C (Celsius degrees) so as to obtain the terracotta;
- Successive covering of the said terracotta with a layer of enamel at high fusibility and successive new firing in a kiln at a temperature of about 980° C so as to re-cover the said characters uniformly.

With such a technique, it is therefore possible to realize directly on the layer of terracotta underneath the characters in high and/or low relief. The successive uniform covering with mortar of at least the characters guarantees a homogeneity not obtainable otherwise with the technical notes of incision.

Advantageously, the operation of curvature comprises the application of the partially dried layer of clay to a mould at a predetermined radius of curvature. In such a way, a deformation is applied to the shield, curving it as much as you like.

### Brief description of the drawings

Further features and the advantages of the present shield, according to the invention, will be clearer with the description of some embodiments that follows, made to illustrate but not limit, with reference to the annexed drawings, where:
- Figure 1 represents an axonometric view of a traditional bottle 1 on which a shield 2 is applied according to the invention;
- Figure 2 represents a frontal and top view relative to the shield alone.
- Figure 3 represents a frontal and top view relative to the bottle on which the shield is applied in accordance with the present invention;

- Figures 4 and 5 represent respectively a section relative to the present shield applied to the bottle in two configurations, that is to say, that reproducing writings in high relief and that reproducing writings in low relief;
- Figures 6 and 7 represent details of the glueing of the shield to the bottle;
- Figure 8 schematically represents a lateral and top view of the mould for realizing the shield according to the method for realizing it.

### Description of a preferred embodiment

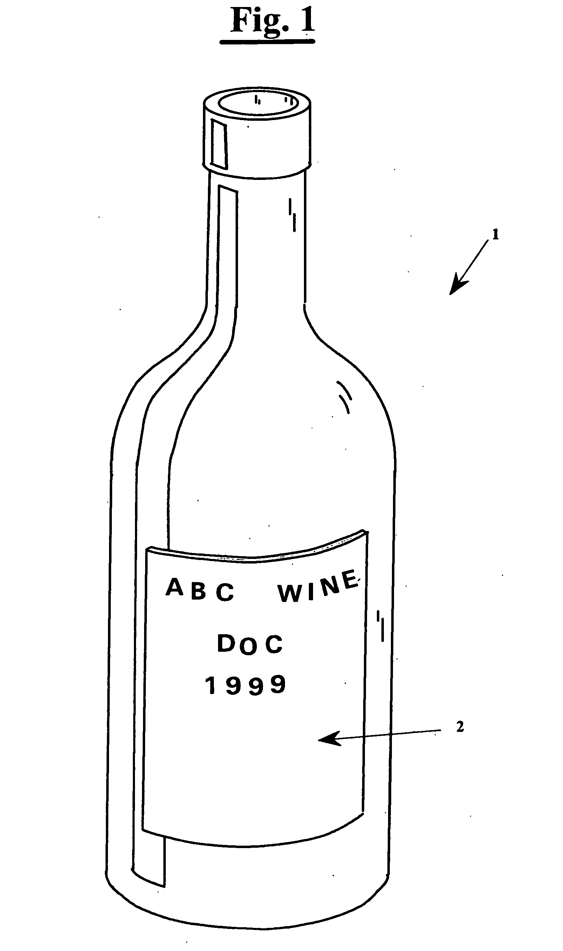

With reference to figure 1, the application to a bottle 1 of a type of shield 2 according to the invention is described.

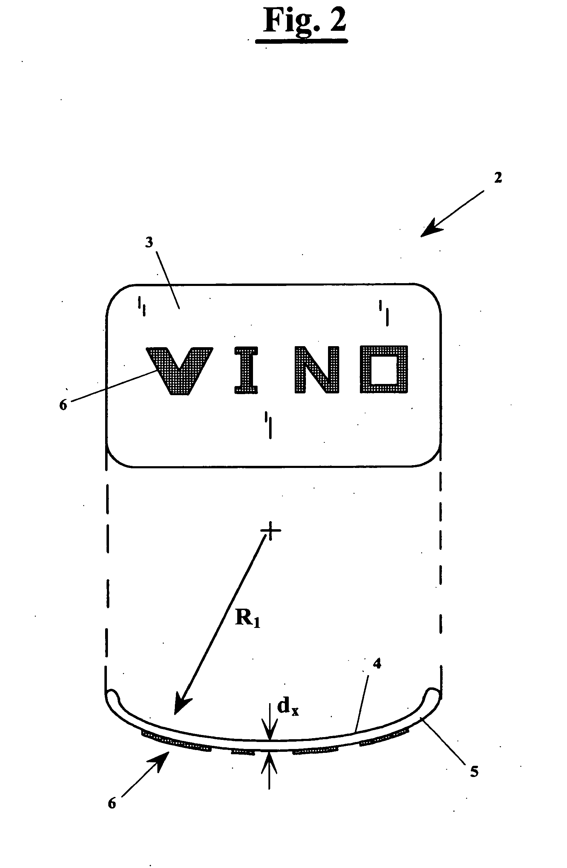

In particular (see figure 2), the shield in question comprises a rigid body 3 of a ceramic material and comprising writing characters 6 realized in high and/or low relief. In particular, always as indicated in figure 2, the body 3 has a predetermined thickness **dₓ** with values comprised within a range that goes from 2mm to 6mm, while the length and width of the shield are compatible with the standard dimensions of shields that are applied to bottles. Different dimensions can certainly be obtained without for this moving apart from the present inventive concept. Always as represented in figure 2, the rigid body 3 comprises an external face 5, generally destined to reproduce the writing 6 on the shield, and an internal face 4, generally destined in use to be placed in adherence to the surface of the bottle. Moreover, always figure 2 highlights, just for illustration purposes, a radius of curvature of the shield indicated with **R₁** for illustration purposes only. The radius of curvature is suitable for tracing the curvature of the bottle itself (at least approximately), thus allowing the correct application and adherence of the shield to the external surface of the bottle.

Always figure 2 represents, for illustration purposes only, the shield reproducing, in correspondence of its external face 5, an identifying writing 6 (the particular writing indicated in the figure is meant just to illustrate and therefore not limit). One of the essential distinctive features of these new types of shields is indeed connected to the realization of the same, which allows to obtain a writing 6 in high and/or low relief.

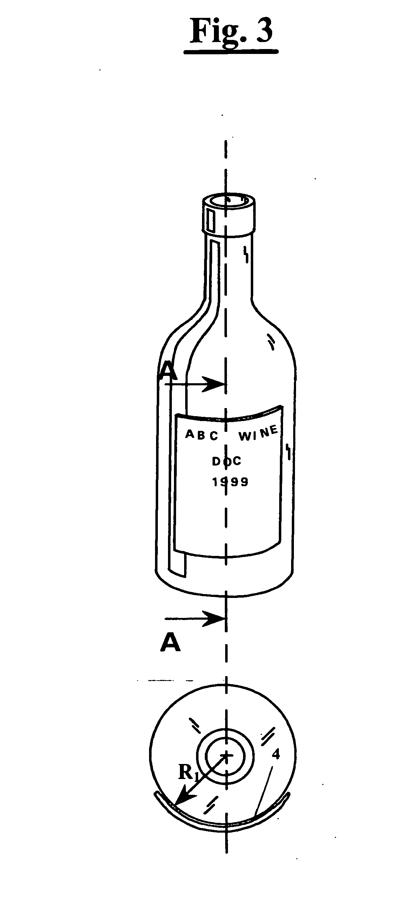

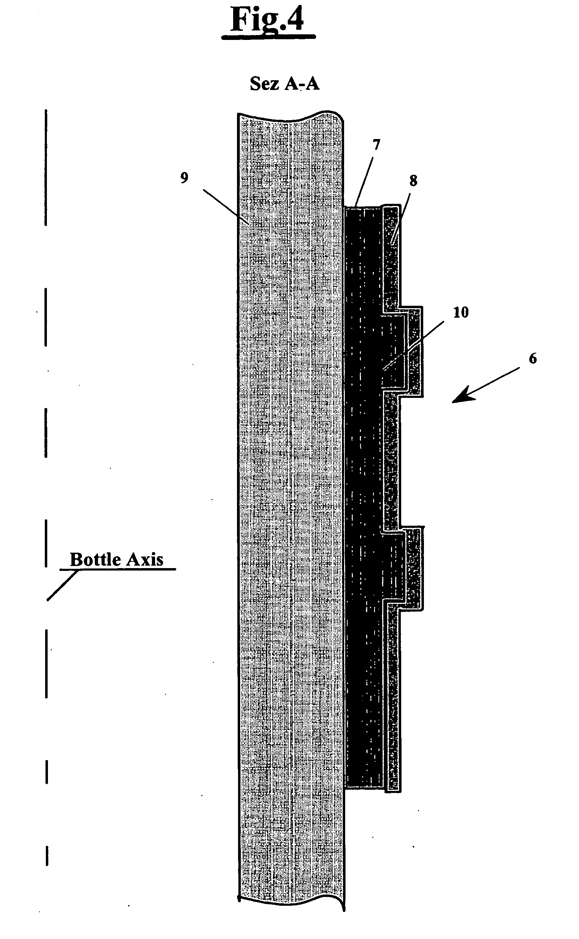

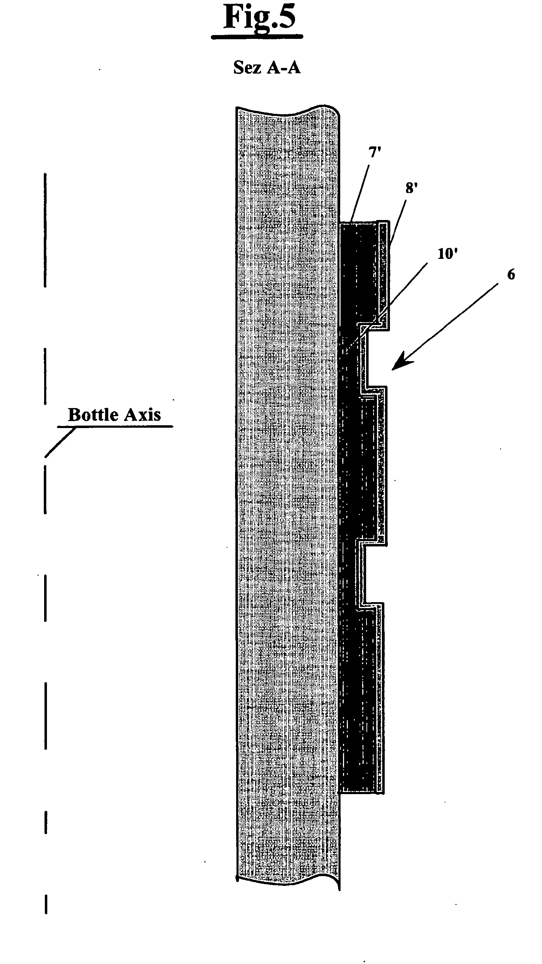

Going further into the technical details of the invention, figure 3 represents a simple application of the new type of shield to a bottle. It is here highlighted the generic radius of curvature **R₁** which allows to make the internal face 4 of the shield match the surface of the bottle, in a predetermined position. Figure 3 further shows the indication of a section A-A shown in figure 4 and 5 and that highlight the constructive details of it.

As indeed represented in section A-A of figure 4, the shield is therefore applied to the surface of the bottle 9 of a predetermined longitudinal axis (as per the background art). However, the structure of the shield is wholly innovative. The first layer of a ceramic material 7, generally terracotta, is indeed highlighted, reproducing the high relief of writing 10. A second layer 8, generally of an enamelled material such as mortar in general, covers the first layer 7 in a substantially uniform and homogeneous manner, at least just the part reproducing the characters of the layer underneath 7. Thus, the operation of covering will give a protective and particularly luminous effect by which the writing in high relief 6 obtained in this way will be particularly bright and conspicuous.

Figure 5 represents an alternative solution in which the writing in high relief has been simply substituted by a writing in low relief 10'. Combinations of high and low relief of writing can certainly be obtained without for this moving apart from the present inventive concept.

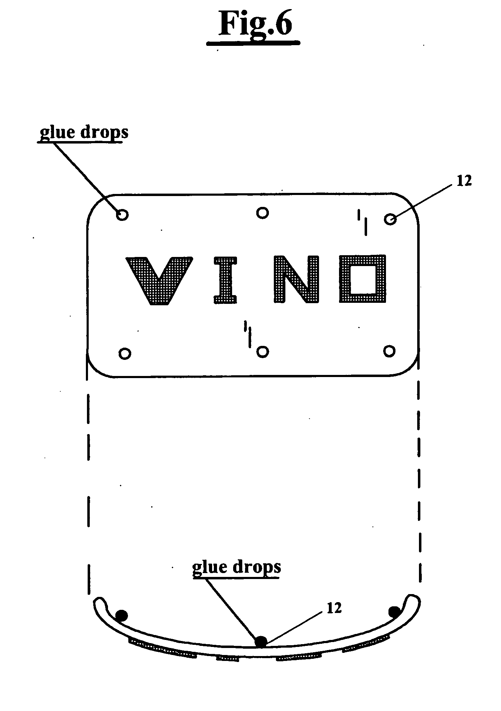

In order to be able to attach the shield to the bottle in a firm way, different solutions can be used. For that purpose, as highlighted in figure 6, simple glue drops 12 can be prearranged in generic spots of the shield and indicated for illustration purposes only in the present figure.

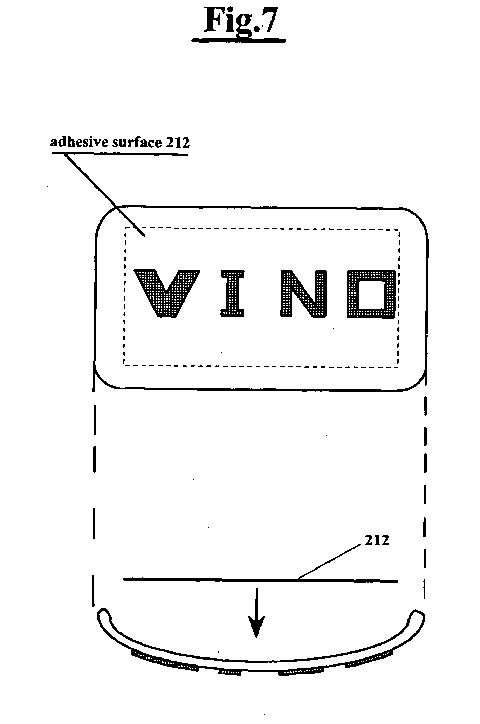

A second preferred solution of the invention (see figure 7), foresees the application of a surface of a bi-component adhesive material 212. The surface 212 will be attached in correspondence of one of its faces to the internal face 4 of the shield, while the opposed face will be attached to the bottle.

We will now describe very briefly the technological process of realization of the shield according to the invention.

The ceramic material is indeed good for being worked in appropriate moulds of plaster or the like, which are not expensive and are easily reproducible. The mould gives the possibility of making different measures of thickness and geometries practically unlimitedly. Moreover, precisely the technique of realization in mould allows to obtain very easily writings in high or low relief on shields.

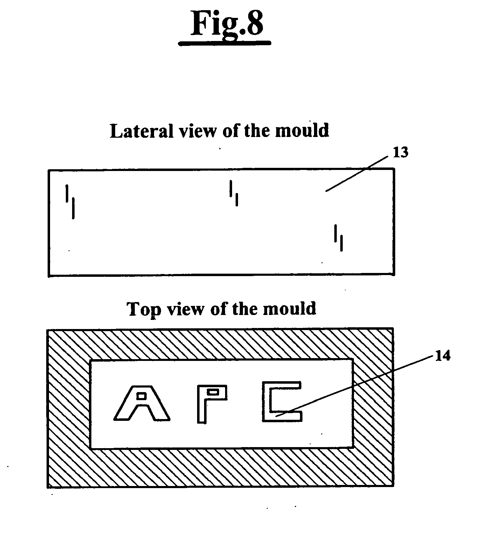

In a first realization phase (see figure 8), a predetermined quantity of clay is cast inside an appropriate mould 13 that reproduces inside incisions of writing in high and/or low relief 14. The mould is made of plaster derived from rubber block, thus allowing to obtain easily and cheaply an infinite variety of moulds reproducing logos, even very complex ones. The writings of the mould certainly represent a negative matrix of the final shield to be realized. Figure 8, just for simplicity purposes, presents schematically the mould with a simple rectangular geometry, like that of a box. Any other geometry can certainly be obtained without for this moving apart from the present inventive concept. Always according to this first elaboration phase, once cast, the clay has to dry partially so that it gets a certain consistency. Thus, the clay can be extracted and applied to appropriate curved moulds so as to give it the desired curved shape necessary for the successive application to the bottle. The curved moulds are therefore provided with appropriate hookings to allow the application of the shield of clay, the said curved moulds duly pierced to favour the passage of air for the drying. Once the drying is completed, the clay is placed again in the kiln at a temperature of about 980° C for about 12 hours, thus obtaining the first layer of solid material 7 or 7' of terracotta of figure 4 or 5. Such a technique allows therefore to obtain various thin measures of thickness, curved shapes and characters not obtainable otherwise with the conventional techniques of lathe elaboration of ceramic materials.

Successively, a second layer of covering material is applied, which re-covers uniformly at least the characters in high and/or low relief present on the layer of terracotta underneath, and therefore all or part of the external face 5, or even the whole shield. A successive firing at about 980° C will compact the enamel on the first layer of terracotta, thus obtaining a finished ceramic product with writings in high and/or low relief covered with enamel uniformly.

It is now clear how all the aims of the present invention have been reached. In particular, it is clear how it was possible to obtain a shield of non-absorbent material and practically indestructible by humidity. It is also evident how a shield realized according to the present guidelines allows to overcome all the inconveniences related to a writing in simple ink, which can be easily affected by humidity. In particular, it is evident how, unlike all ordinary and usually used shields, the shield obtained allows to reproduce three-dimensional writings, which have a greater visual impact on the final consumer of the bottled product. Lastly, it is evident how, unlike US6582805, for example, complex logos can be obtained with such a technique in which the characters in high and low relief of the layer of terracotta underneath are covered with enamel uniformly, thus obtaining gradual and delicate lines without any effect of colour contrast due to incisions.

## Claims

1. A shield (2) for bottles comprising at least a rigid body (3) of a ceramic material reproducing writing characters (6) in high and/or low relief, the said rigid body (3) comprising at least a first layer (7; 7') of terracotta and at least a second layer (8; 8') and **characterized by** the fact that the said first layer (7; 7') reproduces the said writing characters in high and/or low relief and the said second layer is a layer of enamel (8; 8') overlapped with the said first layer in such a way so as to cover the said writing characters uniformly.

2. A shield (2) for bottles, according to claim 1, wherein the bottle is a bottle of wine or sparkling wine.

3. Shield (2) for bottles, according to claim 1 or 2, where the said rigid body (3) has a thickness **dx** comprised within a range that goes from 2mm to 6mm.

4. Shield for bottles, according to one or more of the preceding claims, where the said rigid body (3) is configured according to a predetermined radius of curvature **R₁** in such a way so as to trace, at least approximately, the curved shape of the bottle.

5. Shield for bottles, according to one or more of the preceding claims, where the said shield comprises an internal face (4) for being placed in adherence to the bottle, the said internal face comprising glueing means.

6. Shield for bottles, according to claim 5, where the said glueing means comprise glue drops (12) placed in predetermined spots on the said internal face.

7. Shield for bottles, according to claim 5, where the said glueing means comprise a layer of an adhesive material, such as a liquid bi-component of strong seal (212).

8. Method of realization of a shield for bottles, as per the preceding claims, **characterized by** the fact that it comprises at least the operations of:
- Casting in an appropriate mould (13) of plaster reproducing characters (14) in high and/or low relief of a first layer of liquid clay so that the said layer reproduces the said characters in high and/or low relief (14). - Successive partial natural drying of the said layer of clay.
- Curving of the said layer of clay and simultaneous completion of the drying.
- Successive firing in a kiln at a temperature of about 980° C so as to obtain the terracotta;
- Successive covering of the said terracotta with a layer of enamel at high fusibility and successive new firing in a kiln at a temperature of about 980° C so as to re-cover the said characters uniformly.

9. Method of realization of a shield for bottles, according to claim 8, where the said operation of curving comprises the application of the said layer of clay partially dried to a mould at a predetermined radius of curvature.

10. Method of realization of a shield for bottles, according to claim 8, where the said firing of the terracotta takes place for about 12 hours.

## Patentansprüche

1. Ein Schild (2) für Flaschen, das mindestens einen starren Körper (3) aus keramischem Material zur Nachbildung von Schriftzeichen (6) in Hoch- und/oder Flachrelief enthält, wobei der besagte Körper (3) aus mindestens einer ersten Schicht (7 ; 7') aus Terrakotta sowie aus mindestens einer zweiten Schicht (8 ; 8') besteht, **dadurch gekennzeichnet, dass** die besagte erste Schicht (7 ; 7') die besagten Schriftzeichen in Hoch- und/oder Flachrelief nachbildet und dass es sich bei der besagten zweiten Schicht um eine Emailleschicht (8 ; 8') handelt, die mit der ersten Schicht derart überlappt ist, dass die besagten Schriftzeichen gleichmäßig abgedeckt sind.

2. Ein Schild (2) für Flaschen nach Anspruch 1, wobei die Flasche eine Wein- oder Sektflasche ist.

3. Ein Schild (2) für Flaschen nach Anspruch 1 oder 2, wobei der besagte starre Körper (3) eine Dicke **dx** aufweist, die innerhalb von 2mm bis 6mm liegt.

4. Schild für Flaschen, entsprechend einem oder mehreren der vorherigen Ansprüche, wobei der besagte starre Körper (3) gemäß einem vorgegebenen Krümmungsradius **R₁** derart konfiguriert ist, sodass mindestens annäherungsweise die gekrümmte Form der Flasche nachgezeichnet wird.

5. Schild für Flaschen, entsprechend einem oder mehreren der vorherigen Ansprüche, wobei das besagte Schild eine Innenseite (4) besitzt, welche zum Haften auf die Flasche aufgebracht wird, wobei die besagte Innenseite Klebemittel beinhaltet.

6. Schild für Flaschen nach Anspruch 5, wobei das besagte Klebemittel Klebstofftropfen (12) beinhaltet, die auf die vorgegebenen Stellen auf der besagten Innenseite aufgebracht werden.

7. Schild für Flaschen nach Anspruch 5, wobei das besagte Klebemittel aus einer Schicht Klebematerial wie einem flüssigen Zweikomponentenkleber mit starker Haftung (212) besteht.

8. Methode zur Herstellung eines Schildes für Flaschen, den vorherigen Ansprüchen entsprechend, **dadurch gekennzeichnet, dass** sie mindestens folgende Arbeitsschritte beinhaltet:
- Derartiges Gießen einer ersten Schicht flüssigen Tons in einer Form (13) aus Gips zur Nachbildung von Zeichen (14) in Hochund/oder Flachrelief, sodass die besagte Schicht die besagten Zeichen in Hoch- und/oder Flachrelief (14) nachbildet.
- Nachfolgendes teilweises, natürliches Trocknen der besagten Tonschicht.
- Krümmen der besagten Tonschicht und gleichzeitiges Vollenden des Trockenvorganges.
- Nachfolgendes brennen in einem Brennofen bei einer Temperatur von ca. 980°C, um Terrakotta zu erhalten;
- Nachfolgendes Abdecken des besagten Terrakotta mit einer Emailleschicht bei hoher Schmelzbarkeit sowie nachfolgendes neues Brennen in einem Brennofen bei einer Temperatur von ca. 980°C, um die besagten Zeichen gleichmäßig erneut abzudecken.

9. Methode zur Herstellung eines Schildes für Flaschen, nach Anspruch 8, wobei der besagte Krümmungsvorgang die Anwendung der besagten, teilweise getrockneten Tonschicht auf eine Form bei vorgegebenem Krümmungsradius beinhaltet.

10. Methode zur Herstellung eines Schildes für Flaschen, nach Anspruch 8, wobei der besagte Brennvorgang für Terrakotta ungefähr 12 Stunden lang erfolgt.

## Revendications

1. Un étiquette (2) pour bouteilles comprenant, au minimum, un corps rigide (3) fait en céramique qui reproduit des caractères écrits (6) en grand et/ou léger relief, où ledit corps rigide (3) comprend, au minimum, une première couche (7 ;7') en terre cuite et, au minimum, une seconde couche (8 ; 8'). Ledit corps rigide est **caractérisé par le fait que** la première couche en question (7 ; 7') reproduit lesdits caractères en grand et/ou léger relief et que la seconde est constituée par une couche d'émail (8 ; 8') qui recouvre la première de sorte à recouvrir les caractères écrits de façon uniforme.

2. Une étiquette (2) pour bouteilles, conformément à la revendication 1, où la bouteille en question est une bouteille de vin pétillant ou non.

3. L'étiquette (2) pour bouteilles, conformément à la revendication 1 ou 2, où ledit corps rigide (3) a une épaisseur **dx** comprise entre 2 mm à 6 mm.

4. L'étiquette pour bouteilles, conformément à une ou plusieurs des revendications susmentionnées, où ledit corps rigide (3) se présente avec un rayon **R₁** prédéterminé en mesure de suivre, au moins de façon approximative, la forme courbée de la bouteille.

5. L'étiquette pour bouteilles, conformément à une ou plusieurs des revendications susmentionnées, où ladite étiquette comprend une face interne (4) qui doit être placée tout contre la bouteille et où ladite face interne comprend des moyens collants.

6. L'étiquette pour bouteilles, conformément à la revendication 5, où lesdits moyens collants sont composés de gouttes de colles (12) déposées à des endroits prédéterminés sur ladite surface interne.

7. L'étiquette pour bouteilles, conformément à la revendication 5, où lesdits moyens collants sont composés par une couche de matériau adhésif comme un liquide bicomposant fortement étanche (212).

8. La méthode de réalisation de l'étiquette pour bouteilles, conformément aux revendications susmentionnées, est **caractérisée par le fait qu'**elle comprend, au minimum, les opérations suivantes :
- Une coulée de plâtre dans un moule approprié (13) qui reproduit les caractères (14), en grand et/ou léger relief, d'une première couche d'argile liquide de sorte que ladite couche reproduise les caractères en question en grand et/ou léger relief (14).
- Un séchage partiel et naturel successif de la dite couche d'argile.
- La courbure de la dite couche d'argile puis achèvement simultané du séchage.
- La cuisson dans un four à une température d'environ 980° de sorte à obtenir la terre cuite ;
- Le recouvrement successif de ladite terre cuite par une couche d'émail à haute fusibilité puis nouvelle cuisson dans un four à une température d'environ 980°C pour recouvrir les caractères en question de façon uniforme.

9. La méthode de réalisation de l'étiquette pour bouteilles, conformément à la revendication 8, où ladite opération de courbure comprend l'application de ladite couche d'argile partiellement séchée sur un moule présentant un rayon prédéterminé.

10. La méthode de réalisation de l'étiquette pour bouteilles, conformément à la revendication 8, où ladite cuisson de la terre cuite prend 12 heures environ
